# EUROPEAN PATENT APPLICATION

(11) **EP 4 703 910 A1**
(43) Date of publication of application: **04.03.2026**
(21) Application number: 24197324.7
(22) Date of filing: 29.08.2024
(51) Int. Cl.: G06F 16/55, G06F 16/906, G06N 3/00, G06N 20/00

(54) **PROCESSING OF A SEQUENCE OF DATA PORTIONS**

(71) Applicant: Koninklijke Philips N.V., 5656 AG Eindhoven (NL)
(72) Inventor: MANNE, Shanmukh Reddy, Eindhoven (NL); MAITY, Reevu, Eindhoven (NL); KULKARNI, Venkatesh, Eindhoven (NL); BERNTSEN, Luc, Eindhoven (NL); KOCKX, Franciscus Nicolaas, Eindhoven (NL); BUSSA, Nagaraju, Eindhoven (NL)
(74) Representative: Philips Intellectual Property & Standards

(57) **Abstract**

A mechanism for identifying potentially erroneous first data portions within a time-ordered sequence of first data portions. Each first data portion indicates a classification of a corresponding second data portion of a time-ordered sequence of second data portions. The time-ordered sequence of first data portions is processed to identify temporal pattern information, which indicates a temporal pattern of how the classifications change over time. The temporal pattern information and time-ordered sequence of first data portions are processed to identify any first data portion that deviates from the temporal pattern.

## Description

### FIELD OF THE INVENTION

The present invention relates to the field of data processing, and in particular to processing of data portions.

### BACKGROUND OF THE INVENTION

There is an increasing use and reliance upon machine-learning models or artificial intelligence (AI) to process data and make one or more predictions about the processed data. More generally, a machine-learning algorithm is any self-training algorithm that processes input data in order to produce or predict output data.

Training of a machine-learning model typically makes use of a training dataset comprising a plurality of training input data portions and a corresponding plurality of training output data portions. Each training output data portion corresponds to a training input data portion and represents a predicted outcome of processing the corresponding training input data portion (e.g., the outcome of a desired task). The training dataset therefore comprises labelled data for use in training the machine-learning model.

In more detail, a common approach employed by a machine-learning algorithm to perform training is supervised learning or semi-supervised learning. This may be performed by applying an initialized machine-learning algorithm to each training input data portion to generate predicted output data portions. An error between the predicted output data portions and the corresponding training output data portion is used to modify the machine-learning algorithm. Known methods of modifying a machine-learning model include gradient descent, backpropagation algorithms and so on. This process can be repeated until the error converges, and the predicted output data portions are sufficiently similar (e.g., ±1%) to the training output data portions.

An ongoing difficulty facing the accurate development or training of a machine-learning model is the need to have an extremely large training dataset, at least in order to make the trained machine-learning model robust to different environments and reduce a risk of overfitting.

### SUMMARY OF THE INVENTION

The invention is defined by the claims.

According to examples in accordance with an aspect of the invention, there is provided a computer-implemented method for processing a temporal sequence of first data portions for training a machine-learning model. The computer-implemented method comprises: processing the temporal sequence of first data portions to identify temporal pattern information of the first data portions, wherein: each first data portion indicates at least a predicted classification for a corresponding second data portion of a temporal sequence of second data portions; and the temporal pattern information indicates a temporal pattern of the first data portions; and processing the temporal sequence of first data portions and the temporal pattern information to identify, as a respective deviating first data portion, any first data portion that deviates from the temporal pattern indicated by the temporal pattern information.

The proposed approach makes use of temporal information to identify erroneous first data portions within a sequence of first data portions. The proposed approach recognizes that a temporal sequence of first data portions can be expected to a particular temporal pattern. Deviation from the temporal pattern indicates the possible presence of an erroneous first data portion. By determining temporal pattern information, which represents or otherwise defines the temporal pattern of the sequence of first data portions, then any deviation from the temporal pattern can be readily identified.

In other words, the proposed approach provides a mechanism for flagging or identifying first data portions that may be incorrect. These are considered to be deviating first data portions, as they deviate from an expected temporal pattern within the sequence of first data portions.

Each first data portion indicates a classification of a corresponding second data portion. For instance, each first data portion may identify (if present) the location of a representation of an object of interest in image data of a corresponding second data portion. By identifying potentially erroneous first data portions, then these first data portions can be corrected and/or deleted before a dataset comprising the first and second data portions is used to train a machine-learning model. This provides a more robust and accurate machine-learning model, with a reduced risk of performing an incorrect or inappropriate prediction.

The temporal sequence of first data portions preferably comprises more than two first data portions, e.g., more than five first data portions, e.g., more than twenty first data portions. Increasing numbers of first data portions improves the representativeness of the temporal pattern to long-term trends in the temporal sequence, thereby providing more robust identification of erroneous first data portions.

In some examples, each second data portion in the temporal sequence of second data portions is image data; and each first data portion in the temporal sequence of first data portions is an annotation of the image data of the corresponding second data portion.

This approach advantageously allows for the processing of visual data, where the second data portions represent a series of images or video frames, and the first data portions contain corresponding annotations or labels for those images. This setup is particularly useful for use in producing training data for training machine learning models in computer vision tasks, e.g., the automated analysis and interpretation visual information.

In some examples, each annotation identifies whether or not any part of the image data of the corresponding second data portion is predicted to contain a representation of a predetermined object. This approach helps to identify annotations that incorrectly identify an object within image data, i.e., to improve the generation of training data for use in training an objection detection algorithm.

In some examples, each annotation identifies, if present, a location of the representation of the predetermined object in the image data of the corresponding second data portion. The identified location could be represented in a number of ways, such as coordinates of a bounding box, pixel coordinates of the object's center, or a segmentation mask outlining the object's shape. The inclusion of a location in the first data portions facilitates the production of a training dataset that can be used for more sophisticated computer vision tasks beyond simple classification, such as object detection and/or localization,

In some examples, the step of processing the temporal sequence of first data portions comprises determining, as the temporal pattern, a spatiotemporal pattern representing at least one predicted movement or trajectory of the location of the representation of the predetermined object in the image data across the sequence of first data portions.

The movement or trajectory of the location of the representation of the predetermined object can be expected to be substantially constant (i.e., no sudden jumps) for adjacent or sequential instances of image data. By defining a pattern that represents the predicted movement of the object across the sequence of first data portions, then erroneous predictions about the location of the object (e.g., where there is a sudden jump or a failure to predict) can be readily identified.

The assumption of substantially constant movement is particularly useful for detecting abrupt, unrealistic changes in object position. By comparing each first data portion to the established pattern, the method can flag potential errors (i.e., deviating first data portions), e.g., for further review or automatic correction. This could include sudden (large) jumps in object position that deviate significantly from the expected trajectory defined by the pattern; locations of first data portions that place the object outside of physically possible or likely locations based on its previous positions; and/or any failures to predict an object's location where it should be present based on the overall trajectory indicated by the pattern..

In some examples, each first data portion is produced by an automated annotation algorithm and comprises one of: a null value that indicates a failure to identify the corresponding data portion as belonging to a predetermined classification; and one of a set of non-null values, each of which indicates a successful identification that the corresponding data portion belongs to the predetermined classification.

A null value may, for instance, occur when the automated annotation algorithm is not confident enough to make a classification if it determines that the second data portion does not belong to any of the predefined categories. This automated process may introduce errors or inconsistencies that the proposed method aims to detect through analysis of temporal patterns in the sequence of first data portions. Thus, the proposed approach is particularly advantageous in this context.

In this context, a successful identification is merely a predicted success in identifying the classification of the corresponding data portion (rather than a true success). Thus, a successful identification may, in practice, be a true positive or a false positive.

In some examples, the step of processing the temporal sequence of first data portions and temporal pattern information comprises identifying, as a respective deviating first data portion, any first data portion that comprises a null value and is in a sub-sequence that has: more than a first predetermined number of data portions having a null value; and is immediately preceded and succeeded by respective further subsequences of no fewer than a second predetermined number of data portions having a non-null value.

This approach exploits the temporal context of the sequence of first data portions to identify potentially erroneous classifications. More particularly, this approach recognizes that that a sudden, isolated group of null values surrounded by non-null values may indicate error(s) in the first data portion(s) rather than a genuine absence of a classification. By identifying these subsequences, the method is able to identify potential misclassifications for further review or automatic correction, thereby improving the overall quality of the training dataset.

In some examples, the step of processing the temporal sequence of first data portions to identify temporal pattern information of the first data portions comprises: defining, if present, any first sub-sequences of first data portions that are separated by more than a second predetermined number of consecutive first data portions comprising a null value; and if at least one first-subsequence is present, identifying, for each first sub-sequence, temporal pattern information of the sub-sequence of first data portions to thereby produce temporal pattern information of the first data portions.

By focusing on sub-sequences of non-null values, the method reduces computational overhead by avoiding unnecessary processing of long sequences of null values. Moreover, the identification of distinct sub-sequences allows for more accurate temporal pattern detection within meaningful segments of data, potentially revealing patterns that might be obscured when analyzing the entire sequence as a whole. By isolating sub-sequences separated by null values, the method may effectively filter out noise or irrelevant data, leading to more accurate temporal pattern information.

In some examples, the method further comprises correcting, if present, at least one deviating first data portion by amending each at least one deviating first data portion to align with the temporal pattern indicated by the temporal pattern information. Amending deviating first data portions to align with the temporal pattern provides an automated mechanism for correcting errors in the dataset, thereby reducing or avoiding the need for manual intervention and improving the efficiency of the data preparation process. In particular, aligning the deviating first data portion(s) with the indicated temporal pattern provides a more accurate sequence of first data portion that maintains the temporal coherence improved consistency of the dataset, for improved robustness in the training dataset.

In some examples, the temporal pattern information comprises a curve or curved surface that represents the temporal sequence of the first data portions.

A curve or curved surface is able to capture and represent complex temporal patterns in the data, allowing for a more accurate and appropriate representation of the sequence of first data portions over time. More particularly, by fitting a curve or surface to the temporal sequence of first data portions, fluctuations due to noise or errors are effectively smoothed out, facilitated increased ease in identification of deviating first data portions. More particularly, deviations from the curve or surface can be easily identified and quantified, providing a robust method for detecting anomalous or erroneous data points in the sequence.

It is further noted that a curve or surface representation facilitates interpolation between known first data portions and potentially extrapolation beyond the existing data. This can be exploited, as later explained, for accurate correction of deviating first data portions.

The use of a curve or curved surface provides a mechanism for defining the shape of the pattern across the temporal sequence of first data portions, and provides a clear, objective criterion for identifying deviating first data portions that allows for consistent and reproducible results in detecting anomalies.

In some examples, the step of processing the temporal sequence of first data portions and temporal pattern information comprises identifying any first data portion that is no less than a predetermined distance from the curve or curved surface. Using a predetermined distance threshold provides a clear, quantifiable criterion for identifying deviating first data portions. This allows for consistent and reproducible results in detecting anomalies across different datasets. More particularly, comparing a distance between the curve or curved surface and the first data portion is particularly suited for detecting sudden and/or unrealistic changes in the data that may indicate errors in the annotation process or unexpected events in the underlying data.

The computer-implemented method may further comprise comprising amending, if present, at least one deviating first data portion to lie on the curve or curved surface. This provides a simple and consistent mechanism for aligning the deviating first data portion with the temporal pattern represented by the curve or curved surface. By aligning the deviating data points with the curve or surface, the corrected first data portions maintains consistency with the overall temporal pattern, improving the temporal coherence of the sequence of first data portions and reducing noise and error.

There is also provided a computer-implemented method for training a machine-learning model, the computer-implemented method comprising: performing any herein described method comprising amending at least one deviating first data portion; and training the machine-learning model using the temporal sequence of second data portions and the temporal sequence of first data portions. The step of training the machine-learning model may use more than one set of temporal sequences of first and second data portions, e.g., a larger training dataset. Each set of temporal sequence of first and second data portions may be processed according to any herein described method that comprises amending at least one deviating first data portion.

There is also provided a machine-learning model trained by performing the previously noted method.

There is also proposed a computer program product comprising computer program code means which, when executed on a computing device having a processing system, cause the processing system to perform all of the steps of any herein disclosed computer-implemented method.

There is also provided a processing system for processing a temporal sequence of data portions, the processing system being configured to: process the temporal sequence of first data portions to identify temporal pattern information of the first data portions, wherein: each first data portion indicates at least a predicted classification for a corresponding second data portion of a temporal sequence of second data portions; and the temporal pattern information indicates a temporal pattern of the first data portions; and process the temporal sequence of first data portions and the temporal pattern information to identify, as a respective deviating first data portion, any first data portion that deviates from the temporal pattern indicated by the temporal pattern information.

The skilled person would be readily capable of modifying the processing system to perform the steps of any herein proposed (computer-implemented) method and vice versa.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a system in which embodiments may be employed;
Fig. 2 illustrates a proposed method;
Fig. 3 illustrates an example sequence of first data portions;
Fig. 4 illustrates a step for use in a proposed method;
Fig. 5 illustrates another step for use in a proposed method;
Fig. 6 illustrates another step for use in a proposed method; and
Fig. 7 illustrates another proposed method.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for identifying potentially erroneous first data portions within a time-ordered sequence of first data portions. Each first data portion indicates a classification of a corresponding second data portion of a time-ordered sequence of second data portions. The time-ordered sequence of first data portions is processed to identify temporal pattern information, which indicates a temporal pattern of how the classifications change over time. The temporal pattern information and time-ordered sequence of first data portions are processed to identify any first data portion that deviates from the temporal pattern.

The proposed approach recognizes that classifications (i.e., first data portions) can be expected to follow certain patterns over time. Thus, there is an interdependency between different first data portions in a time-ordered (temporal) sequence of first data portions. Temporal pattern information for a sequence of first data portions therefore provides valuable temporal context usable for detecting anomalies that may not be apparent when considering first data portions in isolation.

The proposed approach offers an automated mechanism for flagging potentially erroneous classifications, reducing the need for manual review and increasing efficiency in the data preparation process.

In the context of the present disclosure, image data may comprise a data representation of the visual appearance of an imaged region, such that the image is a data representation of the appearance of the agricultural region, i.e., a digital image. A temporal sequence is a time-ordered sequence of elements, each of which may be associated with a respective timestamp or similar.

For the present disclosure, when the term "preceding" is used in the context of sequences of elements (e.g., data portions) it refers to an earlier element in the sequence. Likewise, the term "following" is used to refer to a later element in the sequence.

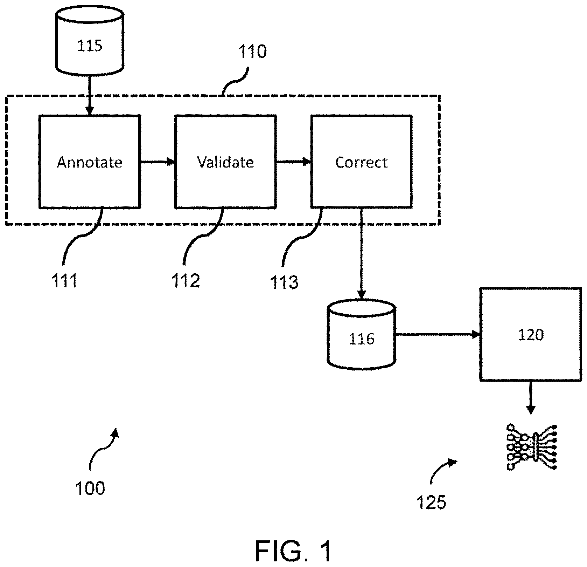

Fig. 1 illustrates a system 100 in which proposed embodiments may be employed. The system 100 is a schematic pipeline that illustrates the development process for training or producing a machine-learning algorithm.

The pipeline 100 comprises a data annotation portion 110 and a training portion 120. In the data annotation portion 110, a training dataset for training the machine-learning model is produced. In the training portion 120, the training dataset produced in the data annotation portion is employed to train a machine-learning model to perform a desired task.

In the data annotation portion 110, input data portions of a raw dataset 115 may be processed using an annotation process 111 to produce respective output data portions. In this context, an annotation process or techniques is a technique may which an input data portion is analyzed and the content of an output data portion, corresponding to the input data portion, is defined that indicates the outcome of a desired task (e.g., a classification task). The annotation process 111 may be automated, semi-automated and/or manual. Each output data portion thereby corresponds to a respective input data portion, and represents at least a predicted classification of the respective input data portion (e.g., indicating whether or not a target element is represented in or by the input data portion).

By way of example only, each input data portion may comprise image data and each corresponding output data portion may comprise an indicator of whether or not the image data of the corresponding input data portion contains a representation of a target object. In some further examples each output data portion may comprise, if the corresponding input data portion comprises a representation of the target object, a bounding box or landmark identifying the location of the target object.

In some approaches, the annotation process 111 is performed by leveraging prompt engineering techniques in machine learning, e.g., to annotate a small sample of input data portions (e.g., <10%) of the raw dataset to produce output data portions. Example prompt engineering techniques include those suggested by, amongst others, Liu, Shilong, et al. "Grounding dino: Marrying dino with grounded pre-training for open-set object detection." arXiv preprint arXiv:2303.05499 (2023) and/or Kirillov, Alexander, et al. "Segment anything." Proceedings of the IEEE/CVF International Conference on Computer Vision. 2023. The annotated small sample may then be used to train a custom deep learning model which serves as the auto-annotation model. The auto-annotation model then processes the (e.g., remaining) input data portions of the raw dataset 115 to produce the output data portions. This provides a fully automated annotation procedure.

In some approaches, the annotation process 111 is performed by leveraging a mix of manual and automated annotation techniques. For instance, a small number of input data portions (e.g., <10%) of the raw dataset may be manually annotated (i.e., an individual may manually define the content of the output data portions for the small number of input data portions). The annotated small sample may then be used to train a custom deep learning model which serves as an auto-annotation model. The auto-annotation model may then process the (e.g., remaining) input data portions of the raw dataset 115 to produce the output data portions. This provides a semi-automated annotation procedure.

In some approaches, the annotation process 111 is performed using only manual annotation techniques. Thus, each input data portion of the raw dataset may be manually annotated (i.e., an individual may manually define the content of the output data portions for each input data portion).

The output data portions produced by process 111 may then be subject to a validation process 112. The validation process aims to identify at least anomalous output data portions, i.e., those output data portions that have not been correctly annotated. Historically, this has been performed manually, with skilled practitioners checking each output data portion to ensure its accuracy and correctness.

The data annotation portion 110 may also comprise a correction process 113, in which each anomalous output data portion is corrected. The correction process 113 has historically been performed manually, such that the skilled practitioner will indicate the correct content for each anomalous output data portion. In this way, a training dataset 116 with input data portions and (validated) output data portions is produced.

In the training portion 120 of the pipeline 100, the training dataset 116 is employed to train a machine-learning model 125 to perform a desired task, namely prediction of a classification of an input data portion.

Approaches for training a machine-learning model 125 using a training dataset of input data portions and output data portions are well known in the art. A common approach employed by a machine-learning algorithm to perform training is (semi-)supervised learning, which has been previously described. Further detail can be found, amongst others, in Cunningham, Pádraig, Matthieu Cord, and Sarah Jane Delany. "Supervised learning." Machine learning techniques for multimedia: case studies on organization and retrieval. Berlin, Heidelberg: Springer Berlin Heidelberg, 2008. 21-49 and/or the documents identified in Van Engelen, Jesper E., and Holger H. Hoos. "A survey on semi-supervised learning." Machine learning 109.2 (2020): 373-440.

The precise mechanism by which a training dataset is processed to generate the machine-learning model capable of performing the desired task is largely immaterial to the present disclosure, and has therefore not been described in detail for the sake of conciseness.

The present disclosure proposes a mechanism for identifying anomalous output data portions. This mechanism can be employed in the performance of the validation process 112, to effectively provide an automated mechanism for correcting the output data portions. Further embodiments describe techniques that are able to automatically perform at least the correction process 113.

For the purposes of the following description, for improved clarity, output data portions are labelled "first data portions" and input data portions are labelled "second data portions". It will be appreciated that each first data portion indicates at least a predicted classification for a corresponding second data portion.

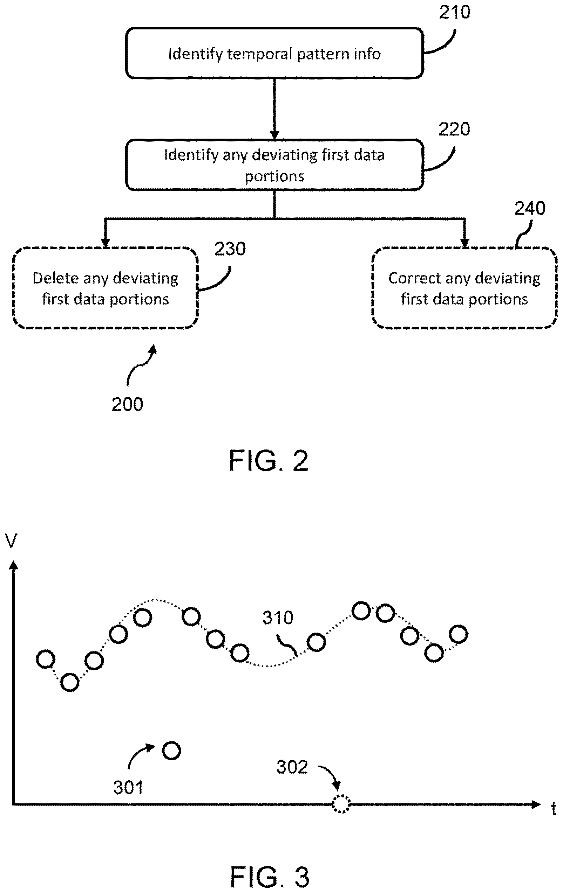

Fig. 2 is a flowchart illustrating a proposed method 200.

The method 200 may be performed by a processing system, an example of which is later described. As such, the method 200 is a computer-implemented method. The method 200 is designed for processing a temporal sequence of first data portions.

In the context of the present disclosure, a temporal sequence is a sequence of data portions, where each data portion represents a point or period of time after any data portion earlier in the sequence. Thus, the position of the data portion in the sequence represents the relative point/period of time represented by the data portion.

Each first data portion represents or indicates at least a predicted classification for a corresponding second data portion of a temporal sequence of second data portions. Thus, each first data portion is associated or corresponds with a second data portion. The first data portion represents a classification of the corresponding second data portion. In this way, each first data portion represents an output data portion (i.e., label or annotation) for a training dataset and each second data portion represents an input data portion for the training dataset (i.e., the data to be labelled or annotated).

As an example, each second data portion in the temporal sequence of second data portions may be image data; and each first data portion in the temporal sequence of first data portions is an annotation of the image data of the corresponding second data portion. For instance, each annotation may identify whether or not any part of the image data of the corresponding second data portion is predicted to contain a representation of a predetermined object. More particularly, each annotation may identify, if present, a location of the representation of the predetermined object in the image data of the corresponding second data portion.

Although not illustrated, the method 200 may comprise a step of obtaining the temporal sequence of first data portions. The step of obtaining may, for instance, comprise receiving the temporal sequence of first data portions from another processing system and/or retrieving the temporal sequence from a memory or database.

The method 200 comprises a step 210 of processing the temporal sequence of first data portions to identify temporal pattern information of the first data portions. A number of example approaches for defining temporal pattern information of the first data portions are later disclosed.

The temporal pattern information indicates, represents or defines a temporal pattern of the first data portions. A temporal pattern represents an expected change or trend of the first data portions over the temporal sequence of first data portions. As later explained, a temporal pattern may be formed or defined from a plurality of temporal sub-patterns, e.g., which may be discontinuous across the temporal sequence.

The temporal pattern information is therefore able to capture information defining how the first data portions are expected to change or evolve over time. In some examples, the temporal pattern may be continuous across the entire sequence of first data portions. However, in other situations, the temporal pattern may be composed of multiple distinct sub-patterns. These sub-patterns may represent different phases or regimes within the overall temporal sequence.

The temporal pattern information may be represented in a variety of data formats, such as mathematical functions, statistical models, or data structures that capture the relevant temporal characteristics. This representation allows for analysis, comparison, and prediction based on the identified patterns.

More particularly, the temporal pattern information defines one or more characteristics of the temporal pattern, e.g., one or more statistical characteristics or properties of the sequence of first data portions over time.

For instance, the temporal pattern information may indicate a moving/rolling mean/average or moving/rolling variance of the sequence of first data portions. A moving average, by its nature, smooths out short-term fluctuations and highlights longer-term trends or cycles in the data. This helps to define a pattern that is less sensitive to erroneous first data portions.

As another example, the temporal pattern information may define a curve or curved surface that represents the temporal sequence of first data portions. By way of example, the curve or curved surface may be a curve or curved surface of best fit, which may be definable using one or more mathematical functions (such as polynomials, splines, or other non-linear models). More particularly, the curve or curved surface may be defined by a mathematical function that describes or indicates the trajectory of the content of the first data portions over the sequence of first data portions (i.e., over time). A curve or curved surface is able to handle multidimensional data, making this approach versatile for various types of temporal data.

It will be appreciated that a moving average of a sequence of first data portions effectively represents a temporal pattern of the first data portions. Similarly, a curve or curved surface representing the first data portions will also represent a temporal pattern of the first data portions.

Approaches for determining or establishing a curve/surface/line of best fit are well known in the art, e.g., (multidimensional) using polynomial regression. Example approaches are proposed by, amongst others, Fang, Lian, and David C. Gossard. "Multidimensional curve fitting to unorganized data points by nonlinear minimization." Computer-Aided Design 27.1 (1995): 48-58; Kron, Gabriel. "Multidimensional curve-fitting with self-organizing automata." Journal of Mathematical Analysis and Applications 5.1 (1962): 46-69; and Ostertagová, Eva. "Modelling using polynomial regression." Procedia engineering 48 (2012): 500-506.

More specifically, the moving average or curve or curved surface provide examples of patterns that represent at least one predicted trajectory of the first data portion across the sequence of first data portions.

In some examples where each first data portion identifies (if present) a location of a representation of a predetermined object within image data of a corresponding second data portion, step 210 may comprise determining a spatiotemporal pattern representing at least one predicted movement or trajectory of the location of the representation of the predetermined object in the image data across the sequence of first data portions. The examples of a moving average (of locations) and/or a curve or curved surface provide suitable examples of a spatiotemporal pattern representing at least one predicted movement or trajectory, as they indicated an expected movement of the object over a time period represented by the sequence of first data portions.

Thus, the temporal pattern identified in step 210 may be a spatiotemporal pattern. A spatiotemporal pattern is an example of a temporal pattern.

The method 200 also comprises a step 220 of processing the temporal sequence of first data portions and the temporal pattern information to identify, as a respective deviating first data portion, any first data portion that deviates from the temporal pattern represented by the temporal pattern information.

Thus, the temporal pattern information is used in step 220 to effectively determine whether or not each first data portion of the temporal sequence of first data portions deviates from the temporal pattern defined, characterized or represented by the temporal pattern information.

For instance, if the temporal pattern information defines a moving average and/or curve or curved surface, then a first data portion that is a significant distance or difference (e.g., above a predetermined threshold) away from the curve or curved surface may be identified as a deviating first data portion. Otherwise, the first data portion will not be considered a deviating first data portion.

It will be appreciated that, in step 220, the determination of whether a particular first data portion deviates from the temporal pattern makes use (if present) of other first data portions before and after the first data portion in the temporal sequence. In this way, the determination of whether a first data portion deviates from the temporal pattern will, for each first data portion (apart from the first and last data portion in the temporal sequence), be responsive to one or more other first data portions before and after said first data portion in the temporal sequence. This is a natural consequence of using the temporal pattern of the temporal sequence of first data portions to identify any deviating first data portion(s).

In other words, at least one deviating first data portion (if identified) may be a first data portion that lies between other first data portions in the temporal sequence of first data portions.

Other examples will be provided later in this disclosure.

Although not illustrated, the method 200 may further a step of outputting any identified deviating first data portions, e.g., to another processing system and/or a memory or database.

In some examples, the method 200 may comprise a step of flagging any deviating first data portions. In some approaches, this flagging step may involve marking or tagging each identified deviating first data portion with a specific indicator or label. For instance, the flagging step may involve setting a binary flag associated with each deviating first data portion to indicate its status. Alternatively, the flagging may involve adding metadata to the deviating first data portions. The flagged deviating first data portions may be stored separately or marked within the original sequence for easy retrieval and further processing.

Fig. 3 conceptually illustrates the aim and underlying recognition of the method 200. In particular, Fig. 3 conceptually illustrates a sequence of first data portions 310 (plotted as a value V against time t). Conceptually, there is a clear temporal pattern within the sequence of first data portions, as there is a temporal dependency between the first data portions.

The present disclosure proposes to make use of this temporal dependency to identify any anomalous first data portions, i.e., any first data portions that do not fit or align with the temporal pattern represented by the temporal pattern information.

By way of conceptual example, if the temporal pattern is represented by a curve 310 fitted to the sequence of first data portions, then a first first data portion 301 is clearly distanced from the temporal pattern. As such, the first first data portion deviates from the temporal pattern.

As another example, a second first data portion 302 contains a null value (i.e., has no value), and fails to fit the temporal pattern of the first data portions. In particular, the second first data portion may lie within a sub-sequence of data portions (having no fewer than a predetermined number of first data portions and no fewer than a second predetermined number of first data portions with a non-null value) which indicates that the second first data portion may be erroneous. As such, the second first data portion deviates from the temporal pattern.

Turning back to Fig. 2, some further optional steps for the method 200 are hereafter described.

The method 200 may optionally comprise a step 230 of discarding or removing any deviating first data portions. This advantageously increases a likelihood that the sequence of first data portions will comprise only those first data portions that accurately represent a predicted classification for the corresponding second data portion.

The method 200 may optionally comprise a step 240 of correcting any deviating first data portions. This may be performed, for instance, using the temporal pattern information to correct any deviating first data portions, e.g., to align the deviating first data portion(s) with the temporal pattern represented by the temporal pattern information.

In some examples, step 240 may make use of one or more interpolation or extrapolation mechanisms based on the temporal pattern information. For instance, if the temporal pattern information defines a curve or curved surface, the deviating first data portion may be adjusted to lie on or near this curve or surface.

In some examples, the correction process may utilize one or more neighboring non-deviating first data portions (to the deviating first data portion) to estimate a more appropriate value for the deviating first data portion. This could involve techniques such as local averaging or weighted interpolation, where the influence of neighboring data points is considered in determining the corrected value.

For cases where the deviating first data portion contains a null value, the correction process may involve predicting a value based on the temporal pattern. This could be performing by examining or processing the values of surrounding non-null first data portions and estimating an appropriate value that maintains the continuity of the temporal pattern.

In some cases, the correction process may involve a combination of automated correction and human intervention. The system may flag deviating first data portions for review by a human practitioner, who is then able to make an informed decision about how to correct the deviating first data portions based on their expertise and understanding of the underlying data, e.g., by inspection of the relevant second data portions corresponding to the deviating first data portions.

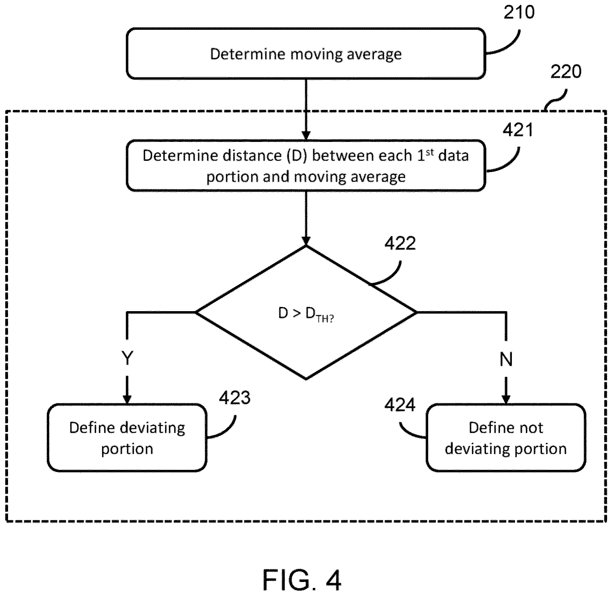

One approach for performing steps 210 and 220 is hereafter described with reference to Fig. 4.

In this approach, the temporal pattern information defines or comprises a moving average of the first data portions (or data derived therefrom), i.e., a moving average over time. The moving average represents an average of X first data portions, where X is a predetermined number of first data portions. In particular, the X first data portions represents a particular moving window of time.

Thus, step 210 may comprise processing the sequence of data portions to determine a moving average of the first data portions across the sequence of data portions.

In examples where each first data portion comprises a single numeric value, then the calculation of a moving average for the first data portions can be trivially performed. For instance, the moving average may be calculated by summing the values of X consecutive first data portions and dividing by X, where X is the predetermined number of first data portions in the moving window. This process may be repeated for each first data portion in the sequence, shifting the window by one position each time.

Where each first data portion comprises a single binary value (e.g., a classification), then the moving average may take a first binary value when a majority of the X first data portions take the first binary value and the moving average may take a second binary value when a majority of the X first data portions takes the second binary value. This process may similarly be repeated for each first data portion in the sequence, shifting the window by one position each time.

In cases where there is an equal number of each binary value within the window (e.g., [1, 0, 1, 0, 1] for X = 5), the moving average may be determined using various tie-breaking strategies. For example: the moving average may default to a predetermined value (e.g., always choosing 0 or 1 in case of a tie); the moving average may maintain the value from the previous window, providing continuity in the temporal pattern; and/or the tie may be broken by considering additional first data points beyond the current window, effectively expanding the window size temporarily to resolve the tie. Other approaches will be apparent to the skilled person.

This binary moving average approach may be extended to handle multi-class classifications (i.e., categorical data) by using a plurality voting scheme instead of a simple majority. In such cases, the moving average would take the value of the class that appears most frequently within the window of X first data portions.

In examples where each first data portion comprises a bounding box identifying the location of a target object within image data (of the corresponding second data portion), then the moving average may be an average center-of-mass of the bounding boxes. For instance, if the location is defined using a set of co-ordinates representing a plurality of dimensions, then the moving average may be defined by, for each dimension, averaging the value for said dimension across the X data portions. Thus, if the co-ordinates define a value for an x-position and a value for a y-position, then all x-position values in the X data portions may be averaged and all y-position values in the X data portions may be averaged to produce the averaged co-ordinates. Of course, if the co-ordinates also define a position in any further dimension (e.g., a z-position) then the corresponding position values in each dimension may be averaged across the X data portions appropriately.

By computing the moving average in this way, the method is able to track the general trajectory of the target object across multiple frames or images, smoothing out potential noise or small fluctuations in individual detections. This approach provides a more stable representation of the object's movement over time, which can be useful for identifying anomalous or deviating detections that fall significantly outside this averaged path.

It will be appreciated that each first data portion (at least from the Xth data portion forwards in the sequence) will therefore be associated with a different value or different values (e.g., for average co-ordinate) for the moving average. The temporal pattern information may therefore define, for each first data portion (at least from the Xth data portion forwards), a moving average. The value(s) of the moving average associated with a nth data output portion may be calculated using the nth data output portion or, preferably, without using the nth output data portion. Thus, the moving average for an nth first data portion may be calculated using only the preceding X first data portions.

Using alternative notation, if it is assumed that each first data portion is associated with a corresponding timestamp, then each first data portion may be associated with a window W between a timestamp t₁ and t₂, where t₂ is the timestamp of the first data portion and t₁ is equal to t₂ - w, where w is the duration of the window W. In this notation, the moving average for each first data portion will be the average of all first data portions in window W for said first data portion (which window W preferably excludes the timepoint t₂). The average may be defined using any above described technique. The duration w of the window W may be predefined, and may (for instance) represent a time period of between 5 and 10 seconds.

In this approach, step 220 may comprise a step 421 of, for each first data portion, determining a distance or difference between the first data portion and the corresponding value(s) for the moving average. Where the first data portion and the corresponding value(s) for the moving average are co-ordinates, this may comprise determining a Euclidean distance. Where the first data portion and the corresponding value for the moving average each comprise a single value, this may comprise determining a difference.

In this approach, step 220 may comprise a step 422 of determining, for each first data portion, whether or not the determined distance is greater than a predetermined threshold D_{TH}. Responsive to a positive determination (i.e., the determined distance exceeding the predetermined threshold), step 220 determines in a step 423 that the first data portion is a deviating data portion. Responsive to a negative determination, step 220 determines in a step 424 that the first data portion is not a deviating data portion.

The predetermined threshold D_{TH} functions as a decision boundary, allowing for flexibility in defining what constitutes a significant deviation. This threshold may be user-adjustable, e.g., dependent upon the specific use case scenario (e.g., the nature of the data being analyzed). A lower threshold would result in more sensitive detection of deviations, potentially flagging minor fluctuations, while a higher threshold would only identify more substantial deviations from the temporal pattern.

In some examples, the predetermined threshold may be defined by a maximum possible range for the determined distance or difference. For instance, the predetermined threshold may be set to be no greater than 10% of a maximum possible range, e.g., no greater than 5% of a maximum possible range, e.g., no greater than 1% of a maximum possible range.

By way of example, for Euclidean distances in a bounded coordinate space (such as image data), the maximum possible range would be the diagonal of the space.

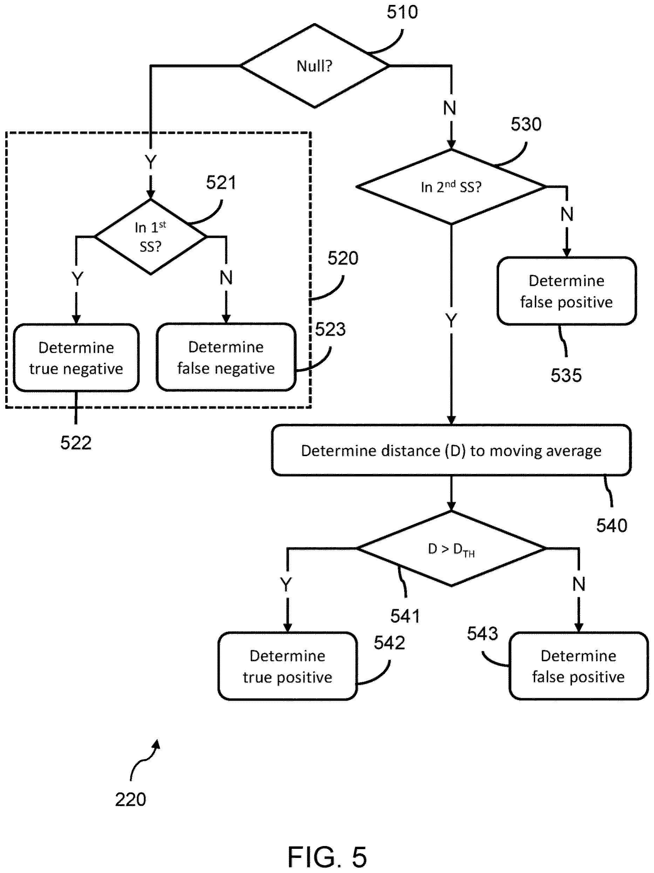

Fig. 5 illustrates a more complex variant for performing step 220. The content of the temporal information determined in step 210 will be described where appropriate. An iteration of the illustrated step 220 is performed for each first data portion of the sequence of first data portions.

In this approach, steps 210 and 220 may be adapted to perform detection of first data portions that are: true positive; true negative; false positive and/or false negative. It will be apparent that a true positive and true negative indicate that the first data portion does not deviate from the temporal pattern, whereas a false positive and false negative indicates that the first data portion deviates from the temporal pattern.

It is also noted that each first data portion may take a null value or a non-null value (of a set of one or more non-null values). A null value indicates a failure to identify the corresponding second data portion as belonging to a predetermined classification (i.e., is either a true negative or a false negative). A non-null value indicates a successful identification that the corresponding data portion belongs to the predetermined classification (i.e., is either a true positive or a false positive). The content of the first data portions may be generated or produced using an automated annotation algorithm, examples of which have been previously described.

A first data portion is considered to be true positive when the content of the first data portion is a non-null value and is the same as the ground truth. A first data portion is considered to be a false positive when the content of the first data portion is a non-null value and is different to the ground truth. A first data portion is considered to be true negative when the content of the first data portion is a null value and is the same as the ground truth. A first data portion is considered to be false negative when the content of the first data portion is a null value and is different to the ground truth. As is well known in the art, the term "ground truth" refers to the true/accurate value of the first data portion (e.g., the correct classification of the corresponding second data portion), representing the objective reality.

The proposed variant comprises a step 510 of determining whether or not the first data portion has a null value. This can be trivially performed.

Responsive to a positive determination in step 510 (i.e., the first data portion has a null value), the method performs a process 520 of determining whether or not the first data portion is a true positive or a false positive.

In the illustrated examples, the process 520 comprises sub-step 521 of determining whether or not the first data portion lies in a first type of subsequence. A first type of subsequence is a subsequence that: i) has more than a first predetermined number of data portions having a null value; and ii) is immediately preceded and succeeded by respective further subsequences of no fewer than a second predetermined number of data portions having a non-null value.

Accordingly, the temporal pattern information may comprise, for each first data portion that has a null value, an indicator of whether or not the first data portion lies in the first type of subsequence. This can be determined in step 210.

Responsive to a positive determination in step 521, i.e., the first data portion lies in the first type of subsequence, the method determines as step 522 that the first data portion is a true negative (i.e., is not a deviating first data portion). Responsive to a negative determination in step 521, the method determines as step 523 that the first data portion is a false negative. This approach recognizes that a sudden, isolated group of null values surrounded by non-null values may indicate error(s) in the first data portion(s) rather than a genuine absence of a classification.

Responsive to a negative determination in step 510, the method performs a step 530 of determining whether or not the first data portion lies in a second type of subsequence. A second type of subsequence is a subsequence having a third predetermined number of first data portions and contains no fewer than a fourth predetermined number of data portions having non-null values.

The third predetermined number of first data portions in the subsequence may be chosen to represent a meaningful duration or segment of data, while the fourth predetermined number of data portions having non-null values ensures a certain density of positive classifications within that segment. For example, where the second data portions comprise image data, the third predetermined number might correspond to a certain number of frames or a specific duration of time (e.g., 1-5 seconds), while the fourth predetermined number might be set to require that a certain percentage (e.g., 80%) of those frames contain non-null values.

Accordingly, the temporal pattern information may comprise, for each first data portion that has a non-null value, an indicator of whether or not the first data portion lies in the second type of subsequence. This can be determined in step 210.

Responsive to a negative determination in step 530, i.e., the first data portion does not lie in the first type of subsequence, the method determines as step 535 that the first data portion is a false positive (i.e., is a deviating first data portion). Thus, by identifying these second type subsequences, the method can establish regions of the temporal sequence where the classifications are likely to be reliable. This information can then be used in subsequent steps to help identify deviating first data portions, particularly false positives that may occur outside of these reliable regions.

Responsive to a positive determination in step 530, the method performs a step 541 of determining a distance or difference between the first data portion and the corresponding value(s) for a moving average (defined by the temporal pattern information). Approaches for performing step 541 have been previously described in the context of Fig. 3.

In this approach, the temporal pattern information defines or comprises a moving average of the first data portions (or data derived therefrom), i.e., a moving average over time.

In this approach, the method may comprise a step 542 of determining whether or not the determined distance is greater than a predetermined threshold D_{TH}. Responsive to a positive determination (i.e., the determined distance exceeding the predetermined threshold), the method determines in a step 543 that the first data portion is a deviating data portion. Responsive to a negative determination, the method determines in a step 544 that the first data portion is not a deviating data portion.

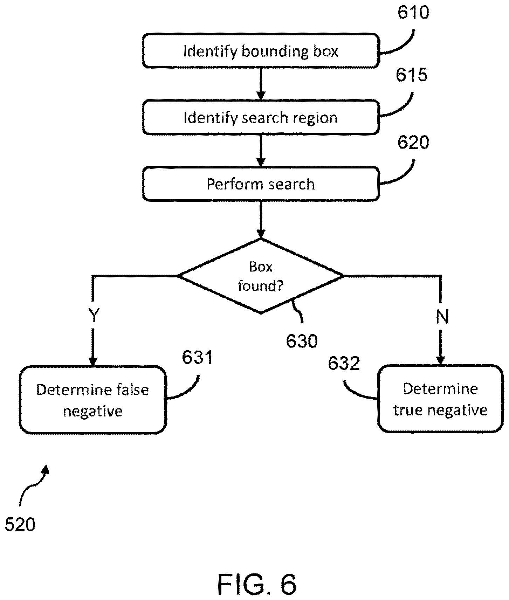

Fig. 6 illustrates an alternative approach to performing process 520 of determining whether or not a first data portion is a true positive or a false positive.

For the purposes of the illustrated approach, each first data portion (output data portion) comprises an identified location of a representation of an object within a corresponding second data portion (input data portion). In this context, each first data portion comprises a set of co-ordinates defining the location of a bounding box that bounds the representation of the object.

In this approach, the process 520 comprises a step 610 of identifying a first bounding box in a nearest preceding other first data portion (to the first data portion) that has a non-null value. The identified first bounding box is treated as a template image (portion) for searching.

The process 520 optionally comprises a step 615 of defining a search region or search space. This may be defined as a circular or spherical area around the center of mass of the identified first bounding box.

The process 520 also comprises a step 620 of searching the second data portion (that corresponds to the first data portion) for the content of the identified first bounding box. Where step 615 is performed, this search may be limited to only the defined search region/space. Step 620 may comprise determining a similarity metric that indicates a greatest measure of similarity between any area in the searched portion of the first data portion and the first bounding box identified in step 610. This can be performed using any known template matching algorithm or the like.

A template matching algorithm effectively identifies which (if any) part of image data matches a template image. Here, the template image is represented by the content of the identified first bounding box. Template matching algorithms typically work by sliding the template image over the image data and computing a similarity metric at each position. Common similarity metrics include cross-correlation, sum of squared differences, or normalized cross-correlation. The position with the highest similarity metric is considered the best match.

Examples of template matching algorithms are disclosed, for instance, in Olson, Clark F. "Maximum-likelihood template matching." Proceedings IEEE Conference on Computer Vision and Pattern Recognition. CVPR 2000 (Cat. No. PR00662). Vol. 2. IEEE, 2000 and Hashemi, Nazanin Sadat, et al. "Template matching advances and applications in image analysis." arXiv preprint arXiv:1610.07231 (2016). Other example approaches are known in the art.

The process 520 also comprises determining, in step 630, whether or not a similar region to the content of the identified first bounding box is identified in step 620 (e.g., whether or not a region having a similarity metric greater than a predetermined metric is identified).

Responsive to a positive determination in step 630, i.e., the searched portion contains a similar region to the content of the identified first bounding box, the method determines as step 631 that the first data portion is a false negative (i.e., is a deviating first data portion). Responsive to a negative determination in step 630, the method determines as step 632 that the first data portion is a true negative. This

From the foregoing examples, it will be apparent that different procedures may be performed to identify any deviating first data portions dependent upon whether or not the first data portion comprises a null value or a non-null value. Previous examples provide techniques in which the temporal pattern information is not required for non-null values.

To perform more efficient processing, and save on memory storage requirements, in some examples the step of processing the temporal sequence of first data portions to identify temporal pattern information of the first data portions comprises: defining, if present, any first sub-sequences of first data portions that are separated by more than a second predetermined number of consecutive first data portions comprising a null value; and if at least one first sub-sequence is present, identifying, for each first sub-sequence, temporal pattern information of the sub-sequence of first data portions to thereby produce temporal pattern information of the first data portions.

In this way, temporal pattern information is not necessarily generated for first data portions having non-null values.

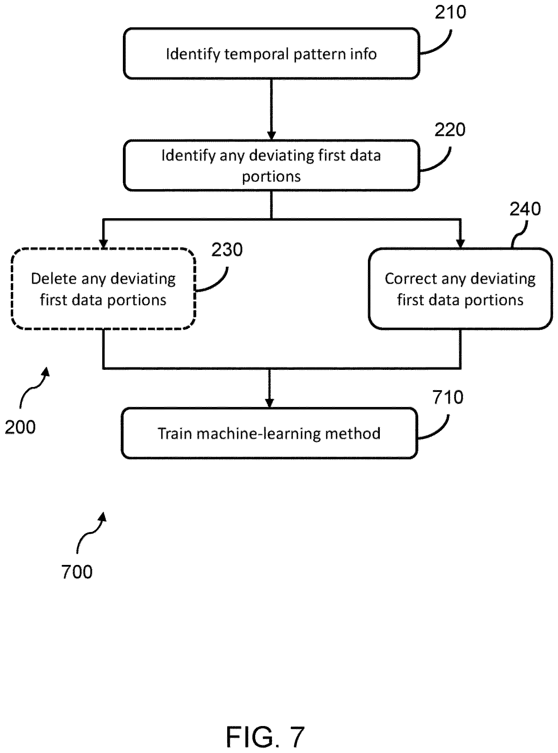

Fig. 7 illustrates a computer-implemented method 700 according to a further embodiment. The method 700 comprises the method 200, previously described, which may include performing at least step 240 (i.e., step 240 is not optional).

Thus, the computer-implemented method 700 comprises a step 240 of correcting or modifying at least one deviating first data portion (e.g., any first data portion identified as being a false positive or a false negative), thus providing an auto-correction model.

One approach for performing step 240 is to make use of the temporal pattern information. In particular, where the temporal pattern information defines a curve or curved surface that represents the sequence of first data portions, then step 240 may comprise amending, if present, at least one deviating first data portion to lie on the curve or curved surface.

The process of amending a deviating first data portion to lie on the curve or curved surface may be performed by: identifying the position of the deviating first data portion with respect to the curve or curved surface, determining the corresponding point on the curve or curved surface that aligns with the temporal position of the deviating first data portion (e.g., by projecting the point onto the curve or curved surface); and adjusting the value(s) of the deviating first data portion to match those of the corresponding point on the curve or curved surface. By aligning the deviating first data portions with the curve or curved surface, the corrected data maintains consistency with the overall temporal pattern observed in the non-deviating first data portions. The proposed approach method acts to smoothen sudden jumps or inconsistencies in the sequence of first data portions, reducing noise and improving the overall quality of the sequence of first data portions.

Another approach for performing step 240 is usable when each first data portion (output data portion) comprises an identified location of a representation of an object within image data of a corresponding second data portion (input data portion). In this approach, template matching is exploited to find the approximate location of the correct bounding box of the object within the second data portion.

In this approach, step 240 comprises performing a respective correction process for each deviating first data portion.

The correction process may comprise identifying a first bounding box identified in a nearest preceding or later other first data portion (to the deviating first data portion) that has a non-null value. The content of the identified first bounding box, in the corresponding second data portion to the nearest preceding other first data portion is subsequentially used, e.g., is treated as a template image (portion) for searching.

Step 240 may define a search region or search space. This may be defined as a circular or spherical area having a predetermined radius/diameter around the center of mass of the identified first bounding box.

Step 240 also comprises searching the image data of the corresponding second data portion (that corresponds to the first data portion) for the content of the identified first bounding box. Where a search region/space is identified, this search may be limited to only the defined search region/space. Step 240 may comprise identifying the part of the image data in the second data portion that most closely resembles the content of the identified first bounding box, e.g., as identifiable by a template matching algorithm.

In the foregoing approach, if there are any sub-sequences of more than one consecutive deviating first data portions in the sequence of first data portion, then the correction process may be performed (for each sub-sequence) on each deviating first data portion in turn. When a deviating first data portion has been corrected, then it can be treated as the nearest preceding other first data portion for the next first data portion that undergoes the correction process.

In another approach, step 240 comprises providing each deviating first data portion, or the second data portion(s) corresponding to each first data portion, to a user for manual/user correction of the first data portion. This may comprise, for instance, providing a user perceptiple output of the relevant second data portion(s) at a user interface and receiving, via the user interface, a user input identifying the content of the first data portion. This provides a mechanism for manual correction and/or amendment of the deviating first data portions.

As another example, step 240 may employ time series forecasting techniques such as ARIMA (AutoRegressive Integrated Moving Average) or similar algorithms to predict the correct values for deviating first data portions from the sequence of (non-deviating) first data portions.

The method 700 may further comprise a step 710 of training a machine-learning model using the temporal sequence of second data portions and the (corrected) temporal sequence of first data portions. In particular, the temporal sequence of second data portions may represent example input data portions and the (corrected) temporal sequence of first data portion may represent corresponding example output data portions. These may be used to perform, in step 710, a supervised training procedure for training a machine-learning model, examples of which are well known in the art, of which some have been previously described.

In this way, the machine-learning model is trained using corrected data, for improved accuracy, reliability and robustness.

The output of step 710 is therefore a machine-learning model. The present disclosure therefore also provides or proposes a machine-learning model.

In some variants of method 700, step 240 is omitted and steps 230 and 710 are performed, such that any deviating first data portions are deleted. Step 230 may also comprise deleting the any second data portions corresponding to the deleted first data portion(s), if present. In this way, the machine-learning model is not trained using data predicted to be inaccurate (i.e., data that does not match the temporal pattern). This increase an accuracy, reliability and robustness of the machine-learning model.

Of course, in other variants, both step 230 and 240 are performed, such that some of the deviating first data portions are deleted, with others being corrected.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a piece of dedicated hardware (e.g., fixed-function hardware) and/or a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. A computer-implemented method is a method that is implemented by a computer, e.g., formed from a multi-purpose or programmable processor and/or one or more pieces of dedicated hardware (e.g., fixed-function hardware).

There is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores or carries a computer program or computer code that, when executed by a processing system, causes the processing system to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. The mere fact that certain measures are recited in mutually different dependent claims does not indicate that a combination of these measures cannot be used to advantage.

In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. If the term "one or more" is used in the claims or description, it is noted the term "one or more" is intended to be equivalent to the term "at least one", and vice versa, and such terms may be used interchangeably.

A single processor or other unit may fulfill the functions of several items recited in the claims. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A computer-implemented method for processing a temporal sequence of first data portions for training a machine-learning model, the computer-implemented method comprising:
processing the temporal sequence of first data portions to identify temporal pattern information of the first data portions, wherein:
each first data portion indicates at least a predicted classification for a corresponding second data portion of a temporal sequence of second data portions; and
the temporal pattern information indicates a temporal pattern of the first data portions; and
processing the temporal sequence of first data portions and the temporal pattern information to identify, as a respective deviating first data portion, any first data portion that deviates from the temporal pattern indicated by the temporal pattern information.

2. The computer-implemented method of claim 1, wherein:
each second data portion in the temporal sequence of second data portions is image data; and
each first data portion in the temporal sequence of first data portions is an annotation of the image data of the corresponding second data portion.

3. The computer-implemented method of claim 2, wherein each annotation identifies whether or not any part of the image data of the corresponding second data portion is predicted to contain a representation of a predetermined object.

4. The computer-implemented method of claim 2 or 3, wherein each annotation identifies, if present, a location of the representation of the predetermined object in the image data of the corresponding second data portion.

5. The computer-implemented method of claim 4, wherein the step of processing the temporal sequence of first data portions comprises determining, as the temporal pattern of the first data portions, a spatiotemporal pattern representing at least one predicted movement or trajectory of the location of the representation of the predetermined object in the image data across the sequence of first data portions.

6. The computer-implemented method of any one of claims 1 to 5, wherein each first data portion is produced by an automated annotation algorithm and comprises one of:
a null value that indicates a failure to identify the corresponding data portion as belonging to a predetermined classification; and
one of a set of non-null values, each of which indicates a successful identification that the corresponding data portion belongs to the predetermined classification.

7. The computer-implemented method of claim 6, wherein the step of processing the temporal sequence of first data portions and temporal pattern information comprises identifying, as a respective deviating first data portion, any first data portion that comprises a null value and is in a sub-sequence that has:
more than a first predetermined number of data portions having a null value; and
is immediately preceded and succeeded by respective further subsequences of no fewer than a second predetermined number of data portions having a non-null value.

8. The computer-implemented method of any one of claims 1 to 7, comprising correcting, if present, at least one deviating first data portion by amending each at least one deviating first data portion to align with the temporal pattern indicated by the temporal pattern information.

9. The computer-implemented method of any one of claims 1 to 8, wherein the temporal pattern information comprises a curve or curved surface that represents the temporal sequence of first data portions.

10. The computer-implemented method of claim 9, wherein the step of processing the temporal sequence of first data portions and temporal pattern information comprises:
identifying any first data portion that is no less than a predetermined distance from the curve or curved surface.

11. The computer-implemented method of claim 9 or 10, further comprising amending, if present, at least one deviating first data portion to lie on the curve or curved surface.

12. A computer-implemented method for training a machine-learning model, the computer-implemented method comprising:
performing the method of claim 8 or 11; and
training the machine-learning model using the temporal sequence of second data portions and the temporal sequence of first data portions.

13. A machine-learning model trained by performing the method of claim 12.

14. A computer program product comprising computer program code means which, when executed on a computing device having a processing system, cause the processing system to perform all of the steps of the method according to any one of claims 1 to 12.

15. A processing system for processing a temporal sequence of data portions, the processing system being configured to:
process the temporal sequence of first data portions to identify temporal pattern information of the first data portions, wherein:
each first data portion indicates at least a predicted classification for a corresponding second data portion of a temporal sequence of second data portions; and
the temporal pattern information indicates a temporal pattern of the first data portions; and
process the temporal sequence of first data portions and the temporal pattern information to identify, as a respective deviating first data portion, any first data portion that deviates from the temporal pattern indicated by the temporal pattern information.
